# EUROPEAN PATENT APPLICATION

(11) **EP 2 934 016 A1**
(43) Date of publication of application: **21.10.2015**
(21) Application number: 15163649.5
(22) Date of filing: 15.04.2015
(51) Int. Cl.: H04N 21/426, H04N 21/434

(54) **BROADCAST RECEIVING APPARATUS AND CONTROLLING METHOD THEREOF**

(30) Priority: 17.04.2014 KR 20140046227
(71) Applicant: Samsung Electronics Co., Ltd, Gyeonggi-do 443-742 (KR)
(72) Inventor: Mun, Gweon-jae, Gyeonggi-do (KR)
(74) Representative: Appleyard Lees

(57) **Abstract**

A broadcast receiving apparatus includes a plurality of tuners which respectively receive a plurality of signals, a user interface which receives a channel zapping command, and a controller which generates a channel list in an arrangement that one or more programs included in adjacent signals among the plurality of signals are processed at different demultiplexers based on reference information for channel grouping and a number of the plurality of tuner, and performs the channel zapping based on the generated channel list in response to reception of a channel zapping command. Accordingly, channel zapping can be quickly performed using a plurality of tuners and channel lists.

## Description

### CROSS-REFERENCE TO RELATED APPLICATIONS

This application claims priority from Korean Patent Application No. 10-2014-0046227, filed on April 17, 2014 in the Korean Intellectual Property Office, the disclosure of which is incorporated herein by reference in its entirety.

### BACKGROUND

### 1. Field

Apparatuses and methods consistent with exemplary embodiments relate to a broadcast receiving apparatus and a controlling method thereof, and more specifically, to a broadcast receiving apparatus configured to perform channel zapping and a controlling method thereof.

### 2. Description of the Related Art

As the electronic technology advances, various types of electronic products are developed and provided. Specifically, various broadcast receiving apparatuses such as televisions (TVs), mobile phones, personal computers (PCs), laptops, personal digital assistants (PDAs), and set-top boxes are used by most families.

User needs for more various functions are generated and expanded as use of the broadcast receiving apparatuses increases. Therefore, products including new than the related technology are provided as efforts of manufacturers to meet the user needs are increasing.

Specifically, when controlling the broadcast receiving apparatuses, one of functions frequently used by a user is channel changing function, which will be referred to herein as a "channel zapping".

However, the broadcast receiving apparatus may have a delay in changing channels in response to an incoming channel changing command after a user transmits a channel zapping command to the broadcast receiving apparatus. Thus, there may be a problem in which the channel is not immediately changed upon inputting of a command and corresponding contents to the changed channel is not immediately provided to a user.

Therefore, in response to a user transmitting a channel changing or zapping command to the broadcast receiving apparatus, it is necessary to quickly perform the channel changing or zapping function.

### SUMMARY

Exemplary embodiments address at least the above problems and/or disadvantages and other disadvantages not described above. Also, the exemplary embodiments are not required to overcome the disadvantages described above, and may not overcome any of the problems described above.

One or more exemplary embodiments provide a broadcast receiving apparatus using a plurality of tuners and channel lists and a controlling method thereof.

According to an aspect of an exemplary embodiment, there is provided a broadcast receiving apparatus including: a plurality of tuners configured to respectively receive a plurality of signals; a plurality of demultiplxers configured to demultiplex one or more programs included respectively in the plurality of signals; and a controller configured to generate a channel list in an arrangement that one or more programs included in adjacent signals among the plurality of the signals are processed at different demultiplexers, based on reference information for channel grouping and a number of the plurality of tuners, and perform channel zapping based on the generated channel list.

The plurality of signals may include a first signal and a second signal which is adjacent to the first signal, and the controller may be further configured to generate the channel list in the arrangement that one or more first programs included in the first signal are processed at a first demultiplexer and one or more second programs included in the second signal are processed at a second demultiplexer.

The broadcast receiving apparatus may further include: a plurality of buffers configured to respectively store the demultiplexed programs.

The plurality of buffers may be further configured to receive and update the demultiplexed programs outputted from the plurality of demultiplxers.

The broadcast receiving apparatus may further include a display, wherein the controller may be further configured to select one program from the plurality of programs stored in the plurality of buffers and display the selected program on the display in response to a channel zapping command being received.

The reference information for channel grouping may include information on one or more of recommended programs, program genres, use history, preferences and resolutions.

The reference information for channel grouping may be stored in advance or received from an external server.

According to another aspect of an exemplary embodiment, there is provided a controlling method of a broadcast receiving apparatus including: receiving a plurality of signals by a plurality of tuners respectively; generating a channel list in an arrangement that one or more programs included in adjacent signals among the plurality of signals are processed at different demultiplxers based on reference information for channel grouping and a number of the plurality of tuners; and performing channel zapping based on the generated channel list.

The plurality of signals may include a first signal and a second signal which is adjacent to the first signal and the generating the channel list comprises generating the channel list in the arrangement that one or more first programs included in the first signal are processed at a first demultiplxer and one or more second programs included in the second signal are processed at a second demultiplxer.

The controlling method may further include: demultiplexing the one or more programs; and storing the demultiplexed one or more programs in a plurality of buffers respectively.

The plurality of buffers may receive and update the demultiplexed one or more programs.

The performing the channel zapping comprises selecting one program from the one or more programs stored in the plurality of buffers and displaying the selected program in response to a channel zapping command being received.

The reference information for channel grouping may include information on one or more of recommended programs, program genres, use history, preferences, and resolutions.

The reference information for channel grouping may be stored in advance or received from an external server.

According to another aspect of an exemplary embodiment, there is provided a broadcast signal processing device including: a multi-tuner comprising a first tuner configured to receive a first transport stream including a first program and a second program; a controller configured to assign the first program to a first demultiplexer and assign the second program to a second demultiplexer; a demultiplexer module comprising the first demultiplexer configured to demultiplex the first program and the second demultiplexer configured to demultiplex the second program in parallel; and a buffer comprising a first buffer configured to store the demultiplexed first program and a second buffer configured to store the demultiplexed second program in parallel.

The multi-tuner may include a second tuner configured to receive a second transport stream that includes a third program and is adjacent to the first transport stream without an intervening transport stream. The controller may be further configured to assign the third program to a third demultiplexer, and the demultiplexer module may further include the third demultiplexer to demultiplex the third program in parallel.

The controller may be further configured to generate a channel list that indicates that the first program is to be assigned to the first demultiplexer and the second program is to be assigned to the second demultiplexer.

The controller is further configured to generate the channel list based on reference information for channel grouping and a number of tuners that the multi-tuner includes.

### BRIEF DESCRIPTION OF THE DRAWINGS

The above and/or other aspects will be more apparent by describing certain exemplary embodiments with reference to the accompanying drawings, in which:
FIG. 1 is a block diagram of a broadcast receiving apparatus according to an exemplary embodiment;
FIG. 2 is a diagram provided to explain a process of generating channel lists according to an exemplary embodiment;
FIG. 3 is a diagram provided to explain a specific process of generating channel lists according to an exemplary embodiment;
FIG. 4 is a detailed block diagram of the broadcast receiving apparatus according to an exemplary embodiment;
FIG. 5 is a detailed block diagram of a signal processor according to an exemplary embodiment;
FIG. 6 is a diagram illustrating the signal processor processing a plurality of signals based on the channel list according to an exemplary embodiment;
FIG. 7 is a diagram provided to explain detailed constitution of the broadcast receiving apparatus according to another exemplary embodiment;
FIG. 8 is a block diagram of a system generating channel lists for the channel zapping according to an exemplary embodiment;
FIG. 9 is a diagram illustrating channel lists according to an exemplary embodiment; and
FIG. 10 is a flowchart provided to explain a controlling method of the broadcast receiving apparatus according to an exemplary embodiment.

### DETAILED DESCRIPTION OF EXEMPLARY EMBODIMENTS

Exemplary embodiments are described in greater detail with reference to the accompanying drawings.

In the following description, same drawing reference numerals are used for the same elements even in different drawings. The matters defined in the description, such as detailed construction and elements, are provided to assist in a comprehensive understanding of the exemplary embodiments. However, it is apparent that the exemplary embodiments can be carried out without those specifically defined matters. Also, well-known functions or constructions are not described in detail since they would obscure the description with unnecessary detail.

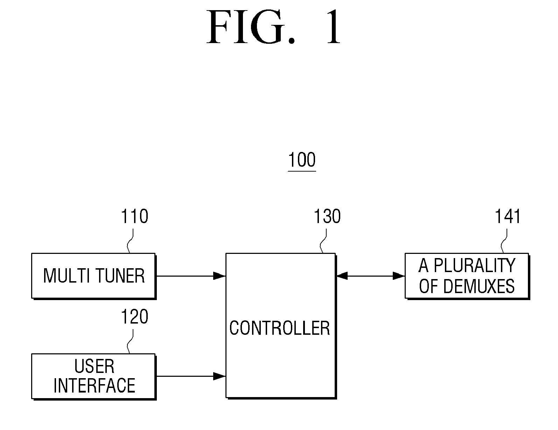

FIG. 1 is a block diagram of a broadcast receiving apparatus according to an exemplary embodiment.

Referring to FIG. 1, the broadcast receiving apparatus 100 includes multi-tuner 110, a plurality of demultiplexers (demuxes) 141, a user interface 120, and a controller 130. Herein, the broadcast receiving apparatus 100 may be implemented to be various forms of electronic apparatuses such as TVs, set-top boxes, electronic boards, electronic tables, large format displays (LFDs), smart phones, tablet PCs, desktop PCs, and laptops. Specifically, the broadcast receiving apparatus 100 according to an exemplary embodiment may include not only a display device such as TV, smart phone or tablet PC which directly displays the contents, but also a device such as a set-top box configured to receive broadcast signals, process the received broadcast signals, and output the processed signals to a display apparatus rather than directly displaying the contents.

The multi-tuner 110 may receive a plurality of broadcast signals transmitted externally. Specifically, the multi-tuner 110 may receive the broadcast signals transmitted from a broadcasting station in a manner of selecting a set frequency. Further, the multi-tuner 110, also called as a synchronizer, is a device that appropriately combines inductance and capacitance. Normally, the multi-tuner 110 is configured to synchronize with various frequencies by varying one or both sides of the coils and condensers or by varying the combination thereof. The multi-turner 110 may include one or more tuners to receive television signals from multiple channels at the same time. With multi-channel capabilities, the broadcast receiving apparatus 100 may reproduce one show while recording another, or may record two or more shows simultaneously.

Thus, as a plurality of the broadcast signals are transmitted from a broadcasting station, the multi-tuner 110 may select and receive broadcast signals corresponding to set frequencies of the multi-tuner 110. For example, tuner 1 set to 460 MHz may select and receive broadcast signals corresponding to 460 MHz, and tuner 2 set to 466 MHz may select and receive broadcast signals corresponding to 466 MHz.

Meanwhile, a plurality of the received signals may each include one or more programs. For example, one signal transmitted from one broadcasting station may include a plurality of programs generated at the broadcasting station. Thus, signal corresponding to Channel 11 may include programs corresponding to sub channels such as 11-1, 11-2 and 11-3.

Further, the plurality of demuxes 141 may demux one or more programs included respectively in the plurality of signals, which will be explained in detail below.

The user interface 120 receives channel zapping commands. The user interface 120 may receive channel zapping-related control signals from a remote controller, although it may be implemented as an input key provided on the broadcast receiving apparatus 100, which receives channel zapping commands directly from a user. Further, the user interface 120 may interoperate with a smart phone, receiving control signals corresponding to channel zapping commands inputted from the smart phone. The user interface 120 may be implemented as a signal receiver, an input key, or a graphic user interface (GUI).

The controller 130 may generate a channel list in such an arrangement that one or more programs included in the adjacent signals among the plurality of signals are processed at difference demuxes, based on reference information for channel grouping and a number of the multi-tuner 110.

That is, the controller 130 may generate a channel list in such an arrangement that each of one or more programs included in the adjacent signals is processed at different demux.

Further, the controller 130 generates a channel map using information on tables such as program and system information protocol (PSIP), program specific information (PSI), out-of-band (OOB) service information (SI), or SI, which constitutes channel information included in the broadcast signals received through the multi-tuner 110. The channel map refers to a channel list that maps channel numbers according to an order of the broadcast signals transmitted from a broadcasting station, i.e., according to an order of the broadcast signals arranged consecutively on the frequency bandwidth.

For example, when the broadcast signals received from a broadcasting station correspond to 460 MHz, such broadcast signals may include a plurality of programs rather than only one program. For example, broadcast signals received from a broadcasting station

AAA may include a plurality of different programs such as "AAA drama," "AAA sports" and "AAA movie."

Therefore, the controller 130 may map AAA broadcast signals with Channel 11 based on the information on the tables constituting the channel information included in the received broadcast signals from AAA broadcasting station, map "AAA drama" program included in AAA broadcast signals with Channel 11-1, map "AAA sports" program with Channel 11-2, and map "AAA movie" program with Channel 11-3.

That is, channel zapping may be performed on the plurality of the programs included in the broadcast signals in order, based on the information on tables constituting the channel information included in the broadcast signals received from a broadcasting station.

The controller 130 may generate a channel list to map a plurality of programs included in a plurality of broadcasting signals respectively with channel numbers based on the reference information for channel grouping and a number of multi-tuner 110 from a channel list mapped according to an order based on the information on tables constituting the channel information included in the broadcasting signals, which will be explained in detail below.

The controller 130 may also perform channel zapping based on the generated channel list in response to receiving a channel zapping command through the user interface 120.

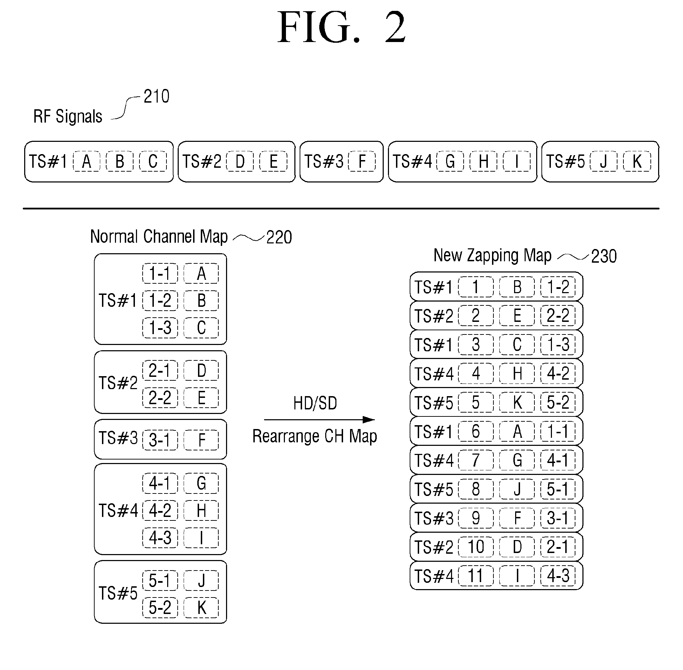

FIG. 2 is a diagram provided to explain a process of generating channel lists according to an exemplary embodiment.

FIG. 2 illustrates a plurality of the broadcast signals 210 received through the multi-tuner 110, and a channel list 220 previously generated based on the plurality of received broadcast signals 210. FIG. 2 also illustrates a channel list 230 newly-generated according to an exemplary embodiment.

As shown, the previously-generated channel list 220 arranges a plurality of the broadcast signals 210 received through the multi-tuner 110 according to an order, and also arranges one or more programs included respectively in the received broadcast signals 210 according to an order. That is, a plurality of programs A, B, and C included in a first transport stream TS#1 received through a first tuner of the multi-tuner 110 are mapped respectively with channels #1-1, #1-2, and #1-3. Further, programs D and E included in a second transport stream TS#2 adjacent to the first transport stream are mapped to channels #2-1 and #2-2.

The plurality of demuxes 141 may be time-division demultiplexers. In that case, the first transport stream TS#1 and the second transport stream TS#2 may be adjacent in a time domain. In a case that the plurality of demuxes 141 are frequency-division demultiplexers, the first transport stream TS#1 and the second transport stream TS#2 may be adjacent in a frequency domain.

Compared to above, the channel list according to an exemplary embodiment is arranged such that one or more programs included in the adjacent signals among a plurality of the received signals are processed at different demuxes to each other. Programs A, B, and C, included in the first transport stream arranged in the previously-generated channel list 220 are mapped respectively with channel #6, #1, and #3, and programs D and E included in the second transport stream adjacent to the first transport stream are mapped respectively with channel #10 and #2. Therefore, one or more programs included in the adjacent transport streams are distributed and arranged so as are processed at different demuxes.

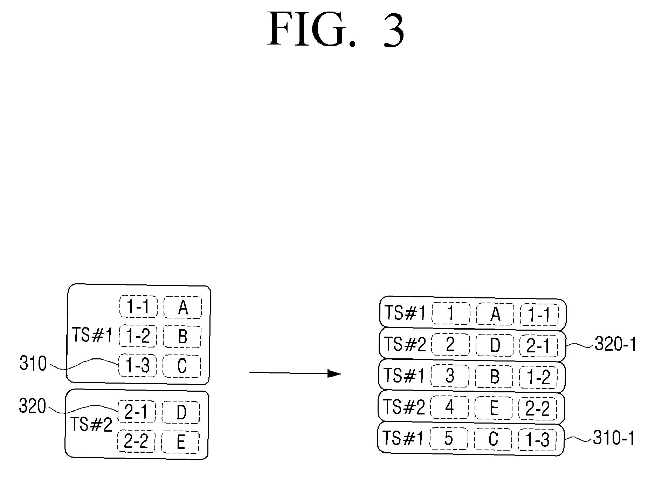

FIG. 3 is a diagram provided to explain a specific process of generating channel lists according to an exemplary embodiment.

The controller 130 may generate a channel list in such an arrangement that, one or more first programs included in a first signal and one or more second programs included in a second signal adjacent to the first signal, which have adjacent channel numbers among the plurality of signals, are processed at different demuxes to each other.

Referring to FIG. 3, the controller 130 may generate a channel list in such an arrangement that program C 310 mapped with channel #1-3 included in the first signal (herein, the term "first signal" is defined to be equivalent to the term "first transport stream"), and program D 320 mapped with channel #2-1 included in the second signal adjacent to the first signal are distributed are processed at different demuxes to each other.

The newly-generated channel list may map program C 310, which is mapped with channel #1-3 and included in the first signal, with channel #5 (310-1), and map program D 320, which is mapped with channel #2-1 and included in the second signal, with channel #2 (320-1). Thus, programs included in the adjacent signals can be processed at different demuxes to each other rather than being processed at one demux.

Meanwhile, on the newly-generated channel list, although program A which is mapped with channel #1 and included in the first signal and program D which is mapped with channel #2 and included in the second signal are programs included in the adjacent signals, programs A and D are arranged in such a relationship that the two programs are processed at different demuxes to each other. The above may be applied to a plurality of programs included in the other signals.

Further, the controller 130 may consider a number of tuners included in the multi-tuner 110 in order to generate channel list in such an arrangement that one or more programs included in the adjacent signals among a plurality of signals are processed at different demuxes to each other, because it is possible to determine the gaps between the plurality of programs according to a number of the number of the tuners included in the multi-tuner 110, in order to arrange one or more programs included in the adjacent signals inconsecutively.

For example, when a number of the multi-tuner 110 is 5, a number of signals that can be tuned at once is 5. Thus, when a number of programs respectively included in the signals is plural, the controller 130 may extract one program from each of 5 signals, and arrange so that the extracted programs are processed at different demuxes to each other.

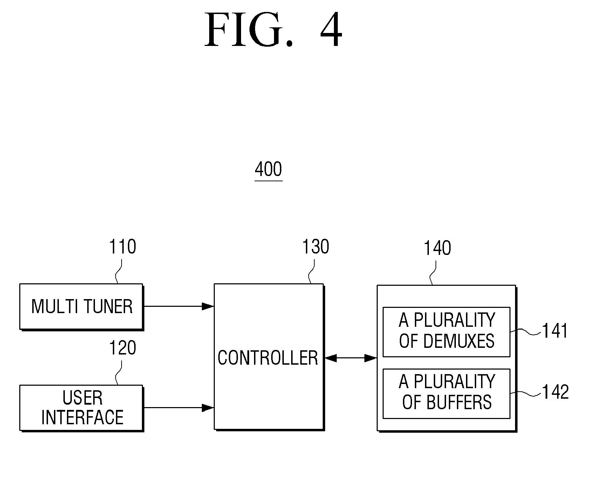

FIG. 4 is a detailed block diagram of a broadcast receiving apparatus according to an exemplary embodiment.

Referring to FIG. 4, the broadcast receiving apparatus 400 may include the multi-tuner 110, the user interface 120, the controller 130, the plurality of demuxes 141 and a plurality of buffers 142. Herein, the plurality of demuxes 141 and the plurality of buffers 142 are provided to process a plurality of the received signals, and so are collectively defined to be a signal processor 140. Accordingly, signal processing in the plurality of demuxes 141 and the plurality of buffers 142 is uniform to a signal processing in the signal processor 140. Further, as the multi-tuner 110, the user interface 120 and the controller 130 are described above, these will not be further explained below.

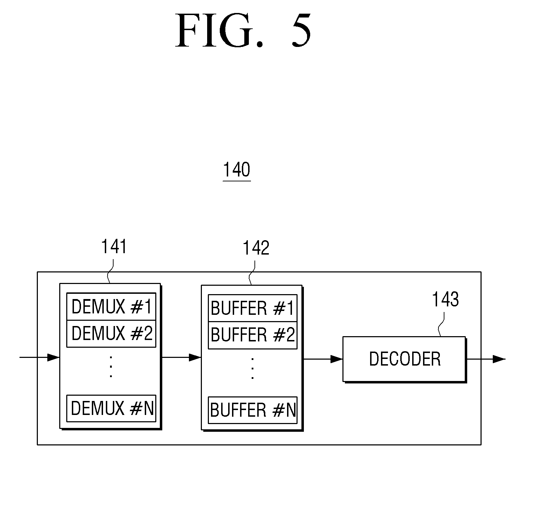

The signal processor 140 may process a plurality of the received signals respectively through the multi-tuner 110. This will be explained below by referring to FIG. 5.

FIG. 5 is a detailed block diagram of a signal processor according to an exemplary embodiment.

Referring to FIG. 5, the signal processor 140 may include a plurality of demuxes 141, a plurality of buffers 142, and a decoder 143.

The plurality of demuxes 141 may demux one or more programs respectively included in the plurality of signals. For example, when the first signal illustrated in FIG. 3 are received by the first tuner, the first demux DEMUX#1among the plurality of demuxes 141 may demux one program among a plurality of programs A, B, and C included in the first signal. Thus, in response to a user inputting a channel zapping command to change program A into program B, the first demux DEMUX#1 may demux program B among a plurality of Programs A, B, and C included in the first signal.

Further, the plurality of buffers 142 may respectively store the demuxed programs. Specifically, the plurality of buffers 142 may be used to quickly perform the channel changing when a user inputs a channel zapping command to change the programs.

Thus, a program currently viewed by a user and a program corresponding to the adjacent channel number may be demuxed in advance by the plurality of demuxes 141 and the demuxed programs may be stored in the plurality of buffers 142 in advance on the newly-generated channel list. In response to a user inputting a channel zapping command to change program, the controller 130 may immediately decode and display the program stored in advance in the buffers. Accordingly, delay in the channel change can be reduced.

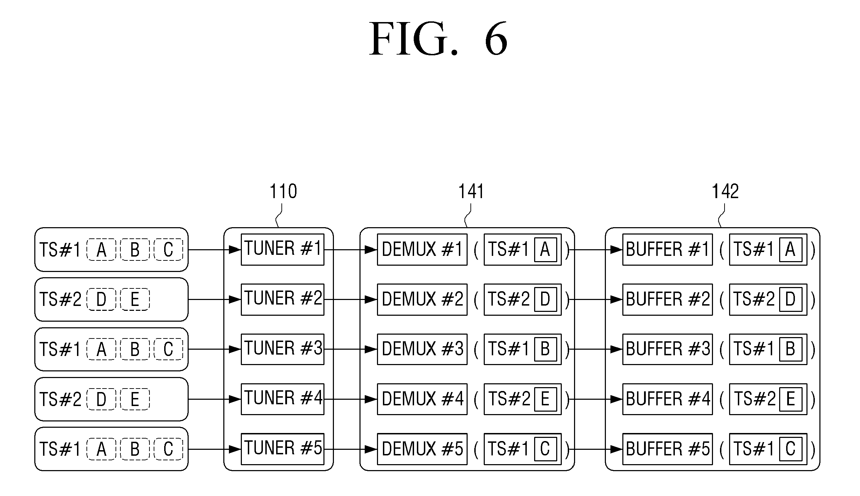

Meanwhile, the controller 130 may generate a channel list in such an arrangement that programs included in one or more signals among a plurality of the received signals are respectively processed at different demuxes to each other. This will be explained in detail below by referring to FIG. 6.

FIG. 6 illustrates a signal processor processing a plurality of signals based on the channel list according to an exemplary embodiment.

As illustrated in FIG. 3, the newly-generated channel list may distinguish even the plurality of programs included in the signal so that one or more programs are processed at different demuxes to each other. Thus, one or more programs included in one signal may be processed at different demuxes to each other.

The controller 130 according to an exemplary embodiment may respectively process one or more programs included in the same signal at different demuxes to each other. Specifically, in FIG. 6, the first tuner TUNER#1 of the multi-tuner 110 may receive a first signal in order to demux program A included in the first signal and store in the buffer based on the generated channel list of FIG. 3. Among a plurality of programs A, B, C included in the received first signal, only program A may be inputted to the first demux DEMUX#1 among the plurality of demuxes 141 according to the generated channel list, and the demuxed program A may be inputted and stored in the first buffer BUFFER#1 among the plurality of buffers 142.

Likewise, the second tuner TUNER#2 of the multi-tuner 110 may receive a second signal in order to demux program D included in the second signal and store in the buffer based on the generated channel list of FIG. 3. Between programs D and E included in the received second signal, only program D may be inputted to the second demux DEMUX#2 among the plurality of demuxes 141 according to the generated channel list, and the demuxed program D may be inputted and stored in the second buffer BUFFER#2 among the plurality of buffers 142.

Meanwhile, a plurality of the tuners 110 may uniformly receive a same signal so that one or more programs A, B, and C, included in the same signal are processed at different demuxes to each other. Thus, the third tuner TUNER#3 of the multi-tuner 110 may receive the first signal uniformly to the first tuner TUNER#3 in order to demux program B included in the first signal and store in the third buffer BUFFER#3 among the plurality of buffers 142. However, the third tuner TUNER#3 may provide program B among one or more programs A, B, and C, included in the first signal to the third demux DEMUX#3 among the plurality of demuxes 141.

Therefore, a plurality of programs included in one signal may be processed in advance at different demuxes and buffers to each other, and the time consumed in selecting and processing one program from the plurality of programs included in one signal can be reduced.

Further, a number of tuners of the multi-tuner 110, a number of the plurality of demuxes 141, and a number of the plurality of buffers 142 are the same each other so that different programs are processed through different paths.

Meanwhile, the plurality of buffers 142 may receive and update the demuxed programs outputted from the plurality of demuxes. The outputted demuxed programs may be continuously received and updated according to time so that a user may not view a previous image. In other words, when the plurality of buffers 142 does not receive and update the outputted demuxed programs, a user should view the image which is several seconds or minutes old.

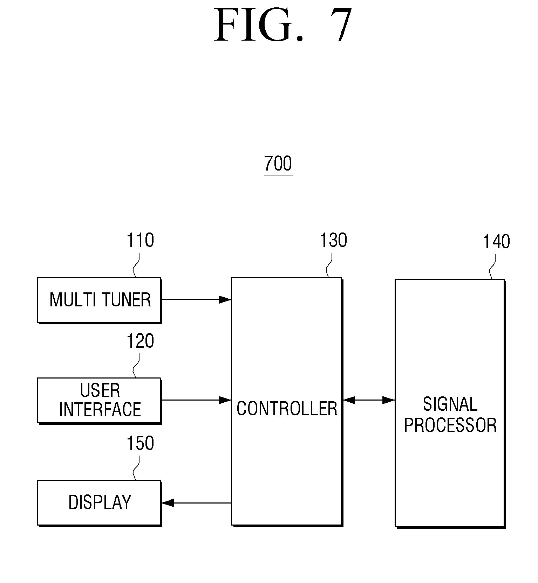

FIG. 7 is a diagram provided to explain detailed constitution of a broadcast receiving apparatus according to another exemplary embodiment.

Referring to FIG. 7, the broadcast receiving apparatus 700 may include the multi-tuner 110, the user interface 120, the controller 130, the signal processor 140, and a display 150. Since the multi-tuner 110, the user interface 120, the controller 130 and the signal processor 140 are described above, these will not be further explained below for the sake of brevity. Herein, the plurality of demuxes 141 and the plurality of buffers 142 will be collectively referred to as the signal processor 140.

The display 150 may display contents corresponding to one or more programs respectively included in a plurality of signals. Herein, contents may include video contents consisting of a plurality of images, such as movie, drama, recorded video, or slow video, and still image contents such as still image, photos or documents.

For the above purpose, the display 150 may be implemented to be a liquid crystal display (LCD), an organic light emitting display (OLED), or a plasma display panel (PDP).

Further, the controller 130 may select one program from the plurality of programs stored in the plurality of buffers in response to a channel zapping command and display the program on the display 150. For example, when corresponding contents to channel #8 should be displayed according to a channel zapping command while corresponding contents to channel #7 is displayed, the controller 130 may select corresponding program to channel #8 from the plurality of programs stored in the plurality of buffers and display the program on the display 150.

Specifically, the controller 130 may select one program from the plurality of programs stored in the plurality of buffers according to a channel zapping command, and control so that the selected program is sent to the decoder 143 for decoding, and the decoded program is displayed on the display.

Meanwhile, the controller 130 may generate a channel list based on the reference information for channel grouping and a number of the multi-tuner. The reference information for channel grouping may include information on one or more of recommended program, program genre, use history, preferences and the resolution.

For example, it is assumed that various programs included in a plurality of the received signals from a broadcasting station include a plurality of sport-related programs, in which case a plurality of the sport-related programs are mapped with channel #10, #41, #60 and #112 rather than being mapped with channel numbers according to an order. Thus, the controller 130 may newly map a plurality of the sport-related programs distributed on various channel numbers with the channels based on the reference information for channel grouping, and generate the grouped channel list.

Meanwhile, the reference information for channel grouping may be previously stored in a storage within the broadcast receiving apparatus 100, or may be received from external server.

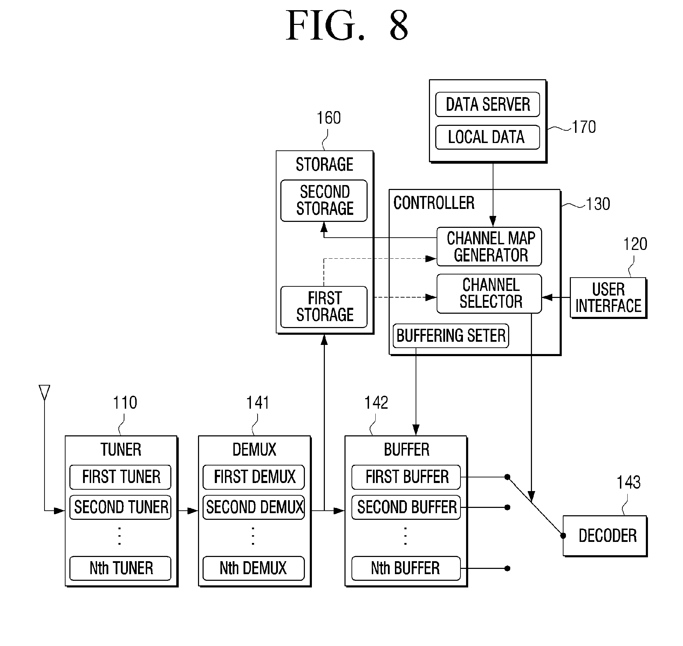

FIG. 8 is a block diagram of a system to generate channel list for the channel zapping according to an exemplary embodiment.

Referring to FIG. 8, a general channel list is generated, in which a plurality of programs included in the plurality of signals are arranged in order according to a plurality of signals processed at the multi-tuner 110, and stored in the first storage of the storage 160. Further, a channel map generator of the controller 130 may generate a channel list in such an arrangement that one or more programs included in the adjacent signals among the plurality of signals are processed at different demuxes to each other based on the reference information for channel grouping which is received through data server or included in local data within the broadcast receiving apparatus, and a number of the multi-tuner 110, as described above. The channel map generator of the controller 130 may also store the generated channel list on the second storage of the storage 160.

Further, the controller 130 may control the multi-tuner 110, the plurality of demuxes 141 and the plurality of buffers 142 so that one or more programs among a plurality of the received signals are respectively processed at different demuxes to each other based on the generated channel list. Thus, the controller 130 may previously tune the signals for channel change, and buffer the programs to be selected.

Accordingly, in response to a channel zapping command received through the user interface 120, a channel selector of the controller 130 may select corresponding program to the received channel zapping command among the plurality of programs previously stored in the plurality of buffers 142, transmit and process the selected program in the decoder 143, and display the decoded program.

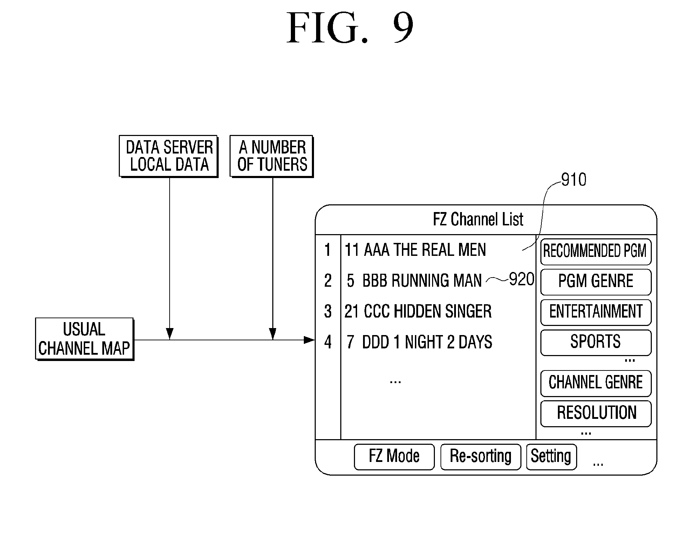

FIG. 9 is a diagram illustrating channel lists according to an exemplary embodiment.

Referring to FIG. 9, the controller 130 may generate a channel list to perform channel zapping from the general channel map based on the reference information for channel grouping received from the data server or the local server, and a number of the multi-tuner.

For example, when the reference information according to the program genre is received from the data server or the local data, the controller 130 may only extract programs corresponding to entertainment among the program genre and arrange the extracted programs. Further, the controller 130 may generate a channel list for channel zapping, in such an arrangement that one or more programs included in the adjacent signals are processed at different demuxes to each other.

FIG. 9 illustrates an entertainment-related list for channel zapping, which extracts and arranges the programs "The real men" 910 aired at AAA, "Running Man" 920 aired at BBB, among others.

Meanwhile, the broadcast receiving apparatus 100 according to an exemplary embodiment may generate a channel list for channel zapping and perform the channel zapping based on the channel list generated correspondingly to the received channel zapping command, when the broadcast receiving apparatus 100 operates on fast channel zapping mode. Alternatively, when the broadcast receiving apparatus 100 operates on a normal channel zapping mode, the channel zapping may be performed based on the previously-generated channel list. Thus, a user may select the fast channel zapping mode or the normal channel zapping mode for controlling the broadcast receiving apparatus 100. Further, the channel list according to an exemplary embodiment or the normal channel list may be generated according to the selected channel zapping mode, and the channel zapping may be performed based on the generated channel list.

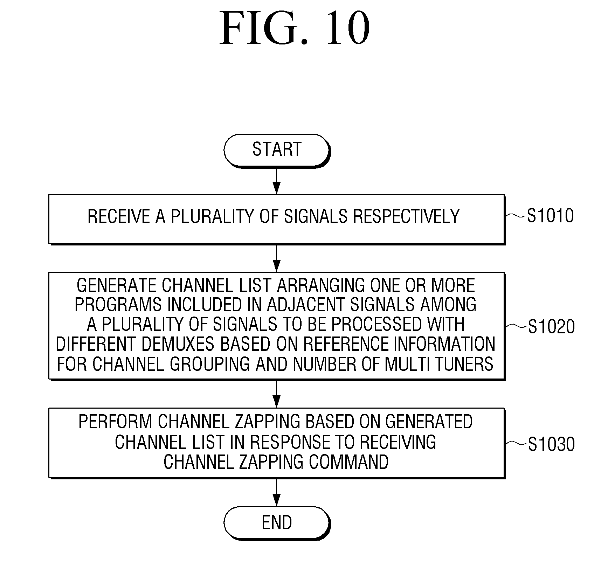

FIG. 10 is a flowchart provided to explain a controlling method of the broadcast receiving apparatus according to an exemplary embodiment.

Referring to FIG. 10, a plurality of signals may be received at S1010.

At S1020, a channel list is generated, in such an arrangement that one or more programs included in the adjacent signals among the plurality of signals are processed at different demuxes to each other, based on the reference information for channel grouping and a number of tuners included in the multi-tuner 110.

Specifically, the channel list may be generated in an arrangement that only one program is demuxed among one or more programs included in the adjacent signals from the plurality of signals, based on the reference information for channel grouping and a number of the tuners included in the multi-tuner 110.

At S1030, the channel zapping may be performed based on the generated channel list in response to reception of a channel zapping command.

Herein, the channel list may be generated in an arrangement that one or more of the first programs included in the first signal and one or more of the second programs included in the second signal adjacent to the first signal among the plurality of signals, are processed at different demuxes to each other.

Further, the controlling method illustrated in FIG. 10 may additionally include demuxing one or more programs respectively included in the plurality of signals and storing the demuxed programs respectively in the plurality of buffers.

Further, the plurality of buffers may receive and update the demuxed programs outputted from the plurality of demuxes.

Further, the operation of performing the channel zapping may select and display one program from the plurality of programs stored in the plurality of buffers according to a channel zapping command.

The reference information for channel grouping may include information on one or more of recommended programs, program genres, use history, preferences and resolutions. Further, the reference information for channel grouping may be stored in advance or received from an external server.

Meanwhile, a non-transitory computer readable recording medium storing programs for consecutively performing the controlling method according to an exemplary embodiment may be provided.

For example, the non-transitory computer readable recording medium may store the programs for performing the operation of generating channel list in such arrangement that one or more programs included in the adjacent signals among the plurality of signals are processed at different demuxes to each other based on the reference information for channel grouping and a number of the multi-tuner and the operation of performing the channel zapping based on the generated channel list in response to reception of a channel zapping command.

Non-transitory computer readable recording medium refers to a medium which stores data semi-permanently and can be read by devices, rather than a medium that stores data temporarily, such as register, cache, or memory. Specifically, the above-mentioned various applications or programs may be stored and provided in non-transitory computer readable recording medium such as a compact disc (CD), digital versatile disc (DVD), hard disk, Blu-ray disk, universal serial bus (USB), memory card, or read-only memory (ROM).

Further, although the block diagrams illustrating the broadcast receiving apparatus does not specifically illustrate a bus, communication between the components in the broadcast receiving apparatus may be performed through the bus. Each device may include a processor such as CPU or micro processor, which performs the above various steps of the operation.

Further, the foregoing exemplary embodiments and advantages are merely exemplary and are not to be construed as limiting the exemplary embodiments. The present teaching can be readily applied to other types of apparatuses. Also, the description of the exemplary embodiments of the present inventive concept is intended to be illustrative, and not to limit the scope of the claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving apparatus, comprising:
a plurality of tuners configured to respectively receive a plurality of signals;
a plurality of demultiplxers configured to demultiplex one or more programs included respectively in the plurality of signals; and
a controller configured to generate a channel list in an arrangement that one or more programs included in adjacent signals among the plurality of the signals are processed at different demultiplexers, based on reference information for channel grouping and a number of the plurality of tuners, and perform channel zapping based on the generated channel list.

2. The broadcast receiving apparatus of claim 1, wherein the plurality of signals comprise a first signal and a second signal which is adjacent to the first signal, and the controller is further configured to generate the channel list in the arrangement that one or more first programs included in the first signal are processed at a first demultiplexer and one or more second programs included in the second signal are processed at a second demultiplexer.

3. The broadcast receiving apparatus of claim 1 or 2, further comprising:
a plurality of buffers configured to respectively store the demultiplexed programs.

4. The broadcast receiving apparatus of claim 3, wherein the plurality of buffers are further configured to receive and update the demultiplexed programs outputted from the plurality of demultiplxers.

5. The broadcast receiving apparatus of claim 3 or 4, further comprising a display, wherein the controller is further configured to select one program from the plurality of programs stored in the plurality of buffers and display the selected program on the display in response to a channel zapping command being received.

6. The broadcast receiving apparatus of any one of claims 1 to 5, wherein the reference information for channel grouping includes information on one or more of recommended programs, program genres, use history, preferences and resolutions.

7. The broadcast receiving apparatus of any one of claim 1 to 6, wherein the reference information for channel grouping is stored in advance or received from an external server.

8. A controlling method of a broadcast receiving apparatus, comprising:
receiving a plurality of signals by a plurality of tuners respectively;
generating a channel list in an arrangement that one or more programs included in adjacent signals among the plurality of signals are processed at different demultiplxers based on reference information for channel grouping and a number of the plurality of tuners; and
performing channel zapping based on the generated channel list.

9. The controlling method of claim 8, wherein the plurality of signals comprise a first signal and a second signal which is adjacent to the first signal and the generating the channel list comprises generating the channel list in the arrangement that one or more first programs included in the first signal are processed at a first demultiplxer and one or more second programs included in the second signal are processed at a second demultiplxer.

10. The controlling method of claim 8 or 9, further comprising:
demultiplexing the one or more programs; and
storing the demultiplexed one or more programs in a plurality of buffers respectively.

11. The controlling method of claim 10, wherein the plurality of buffers receive and update the demultiplexed one or more programs.

12. The controlling method of claim 10 or 11, wherein the performing the channel zapping comprises selecting one program from the one or more programs stored in the plurality of buffers and displaying the selected program in response to a channel zapping command being received.

13. The controlling method of any one of claims 8 to 12, wherein the reference information for channel grouping includes information on one or more of recommended programs, program genres, use history, preferences, and resolutions.

14. The controlling method of any one of claims 9 to 13, wherein the reference information for channel grouping is stored in advance or received from an external server.

15. A broadcast signal processing device comprising:
a multi-tuner comprising a first tuner configured to receive a first transport stream including a first program and a second program;
a controller configured to assign the first program to a first demultiplexer and assign the second program to a second demultiplexer;
a demultiplexer module comprising the first demultiplexer configured to demultiplex the first program and the second demultiplexer configured to demultiplex the second program in parallel; and
a buffer comprising a first buffer configured to store the demultiplexed first program and a second buffer configured to store the demultiplexed second program in parallel.
